# EUROPEAN PATENT SPECIFICATION

(11) **EP 3 084 186 B1**
(45) Date of publication and mention of the grant of the patent: **02.01.2019**
(21) Application number: 14884255.2
(22) Date of filing: 19.11.2014
(51) Int. Cl.: F02C 7/22, F02C 7/224, F02C 9/26, F01D 15/08, F02C 7/141, F02C 7/236

(54) **ICE TOLERANT GAS TURBINE FUEL SYSTEMS**
EIS TOLERIERENDE GASTURBINENKRAFTSTOFFSYSTEME
SYSTÈMES DE CARBURANT DE TURBINE À GAZ TOLÉRANT LA GLACE

(30) Priority: 16.12.2013 US 201361916546 P
(43) Date of publication of application: 26.10.2016
(73) Proprietor: United Technologies Corporation, Farmington, CT 06032 (US)
(72) Inventor: RIPLEY, David Lloyd, San Diego, CA 92117 (US); FAUSETT, Taylor, San Diego, CA 92109 (US)
(74) Representative: Dehns
(86) International application number: PCT/US2014/066335
(87) International publication number: WO 2015/130356

(56) References cited:
- EP-A2- 1 061 243
- WO-A1-2007/104968
- US-A- 4 020 632
- US-A- 4 041 697
- US-A- 4 073 136
- US-A- 4 073 136
- US-A1- 2008 197 064
- US-A1- 2008 250 792
- US-A1- 2011 179 763
- US-A1- 2013 232 989

## Description

### BACKGROUND OF THE INVENTION

### 1. Field of the Invention

The present disclosure relates to gas turbine engines, and more particularly to gas turbine fuel systems for aircraft main engines and auxiliary power units.

### 2. Description of Related Art

Aircraft engine fuel modules require fuel flow from the aircraft fuel system with sufficient pressure and quality for reliable operation. Aircraft fuel systems therefore typically include one or more fuel pumps sized to deliver a specified minimum fuel flow and flow pressure at the engine to aircraft interface (i.e., the engine fuel module) for reliable engine operation. Such pumps are generally sized to provide the minimum flow and pressure throughout the aircraft flight envelope. Aircraft fuel system pumps are typically sized to provide sufficient flow at extreme corners of the flight envelope and can be oversized with respect to the remainder of the flight envelope.

Aircraft fuel systems are subject to ice formation when exposed to extremely cold temperatures, such as during flight at high altitude or extreme latitudes. Since jet fuel generally incudes some amount of water contamination, exposure to cold temperature can cause water contaminant to freeze and form ice within the fuel system. Below certain temperatures the fuel itself can also freeze, forming fuel ice. Once formed, water and fuel ice particles can become entrained in fuel transiting the fuel system. Above a certain particle size, such entrained ice particles can damage internal fuel system structures, and occlude internal structures and passages. In sufficient volume, such ice particles can also occlude the fuel system, reducing fuel flow. Expansion of the flight envelope to operational environments where the fuel system is subject to increased rates of ice formation therefore typically requires increasing aircraft fuel system pump capacity and size.

One approach to address ice formation in conventional aircraft fuel systems is to filter fuel transiting the system using a screening device. This allows fuel transiting the aircraft fuel system and into the engine fuel system to arrive at the engine fuel module filtered to an appropriate level such that residual entrained ice and debris does not damage the engine fuel module. However, since such screening devices can reduce fuel pressure prior to reaching the engine fuel pumps, aircraft fuel system pumps need to be sufficiently sized to overcome the pressure drop anticipated during icing conditions.

US 4073136 discloses a fuel supply system for a gas turbine engine comprising a filter and a pump driven by a shaft of the engine to pressurise the filtered fuel.

US 4041697 discloses a fuel delivery and control system for a gas turbine engine comprising a fuel pump driven by the engine for supplying fuel via a heat exchanger and a filter to the engine.

US 2013/232989 discloses a fuel heating system for a gas turbine engine comprising a filter, a pump and a fuel-air heat exchanger.

### SUMMARY OF THE INVENTION

Viewed from a first aspect, there is provided a gas turbine engine system according to claim 1 comprising: an aircraft fuel system; a fuel conditioner; and a gas turbine engine assembly comprising a gas turbine engine and a fuel module; wherein the fuel conditioner comprises an ice debris separator configured to receive a fuel flow from the aircraft fuel system; a fuel pump in fluid communication with the ice debris separator, wherein the fuel pump is downstream of the ice debris separator and configured to receive filtered fuel and output pressurized fuel; a heat exchanger in fluid communication with the fuel pump, wherein the heat exchanger is downstream from the fuel pump and upstream of the fuel module of the gas turbine engine assembly, and wherein the heat exchanger is configured to receive a pressurized fuel flow output from the fuel pump and output a heated fuel flow; and wherein the fuel pump is a motive flow pump configured to combine the fuel flow from the ice debris separator and a motive fuel flow from the fuel module.

The fuel conditioner may also include an air oil cooler in fluid communication with the heat exchanger and configured to receive cooled oil from the heat exchanger. The air oil cooler may include an air cooled body configured to further cool the oil from the heat exchanger using an air flow.

In certain embodiments the ice debris separator can include a heated filter screen for separating ice of a predetermined size from fuel entering the fuel inlet. The air oil cooler and heat exchanger can be integrally housed in a common housing.

In accordance with certain embodiments, the air oil cooler can selectively cool the oil flow based on ambient air temperature. The air oil cooler can be connected to the heat exchanger and configured for enhancing heating of fuel flowing through the heat exchanger for deicing fuel supplied to a gas turbine engine.

In accordance with certain embodiments, fuel pressure at the fuel inlet of the ice debris separator can be less than about the fuel total vapor pressure plus 5 pounds per square inch. Fuel pressure at the heat exchanger fuel outlet can be at least the fuel total vapor pressure plus 12 pounds per square inch.

In accordance with certain embodiments, the fuel module may include a fuel pump, a fuel filter and a fuel heater. The fuel pump may be in fluid communication with the heat exchanger and be configured to receive heated fuel from the heat exchanger and output a further pressurized fuel to the motive flow pump and the gas turbine engine.

In certain embodiments, the motive flow pump can be a first fuel pump stage and the gas turbine fuel module can include a second fuel pump stage and a separate third fuel pump stage. The second fuel pump stage can be an impeller pump connected to receive fuel from the fuel outlet of the heat exchanger. The third fuel pump stage can be a gear pump connected to a fuel outlet of the second fuel pump stage for receiving fuel from the fuel outlet of the impeller pump. It is contemplated that the gas turbine engine can be an aircraft main engine or an auxiliary power unit.

These and other features of the systems and methods of the subject disclosure will become more readily apparent to those skilled in the art from the following detailed description of preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an aircraft fuel system including a fuel conditioner, in accordance with an embodiment;
Fig. 2 is a schematic view of the fuel conditioner of Fig. 1, showing elements of and fluid flows within the fuel conditioner, according to an embodiment;
Fig. 3 is a schematic view of the heat exchanger of the fuel conditioner of Fig. 1, showing the heat exchanger, air oil cooler, and fluid flows associated with the heat exchanger and air oil cooler, according to an embodiment; and
Fig. 4 is a schematic view of an example of a fuel conditioner not forming an embodiment of the invention, showing the ice debris separator arranged downstream from the motive flow pump.

### DETAILED DESCRIPTION OF THE PREFERRED EMBODIMENTS

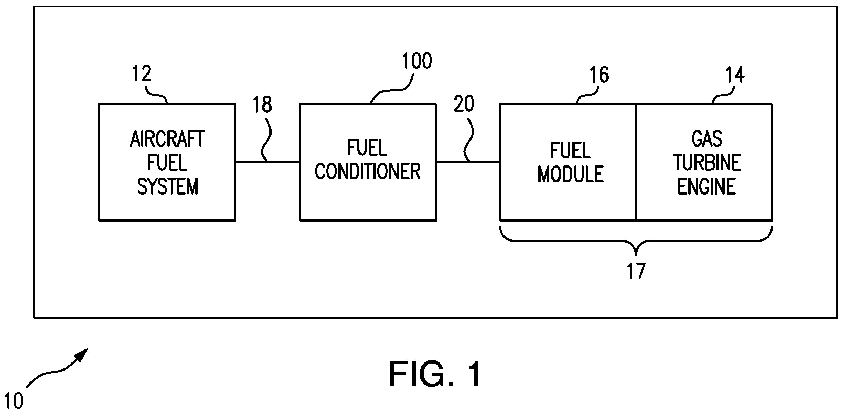

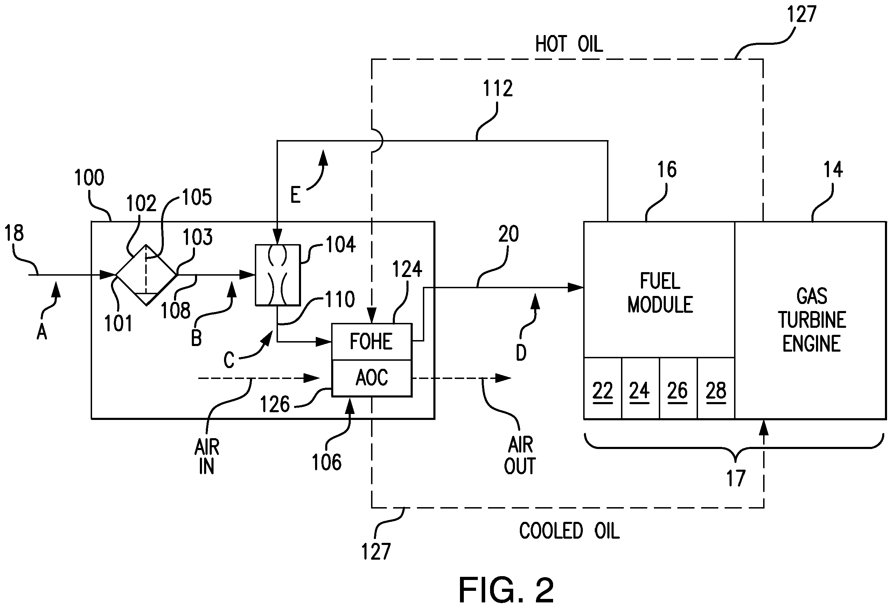

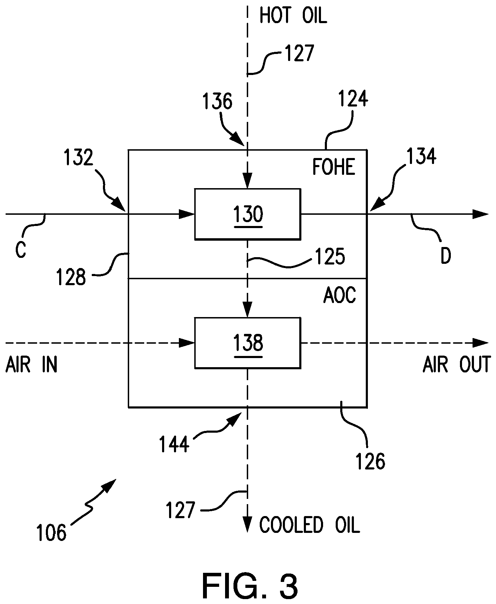

Reference will now be made to the drawings wherein like reference numerals identify similar structural features or aspects of the subject disclosure. For purposes of explanation and illustration, and not limitation, a partial view of an exemplary embodiment of a fuel conditioner in accordance with the disclosure is shown in Fig. 1 and is designated generally by reference character 100. Other embodiments of fuel systems in accordance with the disclosure, or aspects thereof, are provided in Fig. 2 and Fig. 3, as will be described. The systems and methods described herein can be used for gas turbine engines, such as for aircraft main engines and auxiliary power units (APUs) for example.

Fig. 1 shows an aircraft 10 schematically, according to an embodiment. Aircraft 10 includes an aircraft fuel system 12, an engine assembly 17, and a fuel conditioner 100. Aircraft fuel system 12 is in fluid communication with fuel conditioner 100 through a fuel passage 18. Fuel conditioner 100 is in fluid communication with engine assembly 17 through a fuel passage 20. In at least a portion of the aircraft flight envelope aircraft fuel system 12 may provide a reduced flow of fuel to the gas turbine engine 14. Fuel conditioner 100 is configured to receive a fuel flow from aircraft fuel system 12, condition the fuel flow as described below, and provide a
fuel flow that is sufficient for reliable operation of gas turbine engine 14 throughout the entire aircraft flight envelope.

Engine assembly 17 includes a fuel module 16 in fluid communication with a gas turbine engine 14. In an embodiment, fuel module 16 includes a fuel manifold (not shown), and is in fluid communication with fuel passage 20. The fuel manifold is also in fluid communication with one or more combustors (not shown) of gas turbine engine 14. In an embodiment, the gas turbine engine 14 includes minimum operating parameters including at least one of a predetermined minimum temperature, a minimum fuel pressure, and a maximum entrained debris and contamination particulate size from fuel passage 20.

Fuel conditioner 100 is configured to separate entrained ice and debris, increase fuel pressure, and heat fuel flowing through the fuel conditioner 100. This enables engine assembly 17 to receive a fuel flow that meets its requirements throughout the flight envelope, without requiring an increase in the size of the pumps within the fuel module 16. This can provide reliable engine operation even in the event that fuel flow from aircraft fuel system 12 drops below the predetermined minimum temperature, a minimum fuel pressure, or includes contaminate exceeding the maximum entrained debris and contamination particulate size.

Fig. 2 depicts the elements of fuel module 16 and fuel conditioner 100, according to an embodiment. Fuel module 16 includes an impeller pump 22, a fuel filter 24, a gear pump 26, and a fuel heater 28. Impeller pump 22 includes an impeller and is in fluid communication with fuel passage 20. Fuel filter 24 is in fluid communication with impeller pump 22. Gear pump 26 is in fluid communication with fuel filter 24. Fuel heater 28 is in fluid communication with both gear pump 26 and with gas turbine engine 14 and provides fuel to fuel injectors (not shown). At least one of impeller pump 22 and gear pump 26 is also in fluid communication with a motive fluid passage 112 (i.e., a pressurized fuel supply passage) and is configured to provide a pressurized fuel flow to fuel conditioner 100 through motive fluid passage 112. As will be appreciated by those skilled in the art, other arrangements of fuel module 16 are possible, and fuel module 16 can include fewer or additional elements as well as different ordering of the elements as suitable for specific applications.

Fuel conditioner 100 includes an ice debris separator 102, a fuel pump 104, and a heat exchanger 106. Ice debris separator 102 is in fluid communication with fuel passage 18 and includes a fuel inlet 101, a fuel outlet 103, and a screen element 105. Fuel passage 18 connects to an upstream portion of ice debris separator 102 through fuel inlet 101. Fuel passage 108 is in fluid communication with a downstream portion of ice debris separator 102 through fuel outlet 103. Screen element 105 is arranged between fuel inlet 101 and fuel outlet 103 and is configured to separate ice and debris that is above a maximum size from fuel traversing screen element 105. Screen element 105 is configured to filter out ice and/or debris that is above a size in which entrained ice and/or debris could otherwise prevent reliable operation of gas turbine engine 14. Screen element 105 can further include a heating element configured to reduce filtered ice below the maximum size, which may improve the performance of the fuel conditioner 100.

In an embodiment, fuel pump 104 of the fuel conditioner 100 is a motive flow pump, such as an ejector pump. Fuel pump 104 is in fluid communication with ice debris separator 102 through a fuel passage 108, heat exchanger 106 through a fuel passage 110, and at least one of impeller pump 22 and gear pump 26 of fuel module 16 through motive fluid passage 112. Fuel pump 104 increases or boosts fuel pressure flowing to engine assembly 17 using pressurized fuel received through motive fluid passage 112 to a level that is conditioned for reliable engine operation. This potentially compensates for fuel pressure losses associated with ice debris separator 102 and/or heat exchanger 106. It can also compensate for insufficient fuel pressure from aircraft fuel system 12 (shown in Fig. 1).

Fuel pump 104 cooperates with impeller pump 22 and/or gear pump 26 to form a three stage fuel pump. Fuel pump 104 is a discrete first fuel pump stage, impeller pump 22 is a second fuel pump stage, and gear pump 26 is a third fuel pump stage. Adding fuel pump 104 as a first stage to a two stage pump allows for reliable operation even in portions of a flight envelope where fuel supplied by aircraft fuel system 12 might otherwise require larger pumps to produce an adequate supply of fuel. For example, fuel pump 104 can compensate for pressure drop associated with separating ice and debris from ice debris separator 102 and/or heat exchanger 106. As another example, fuel pump 104 can increase the fuel pressure such that the impeller of impeller pump 22 does not undergo cavitation due to low fuel pressure.

Heat exchanger 106 includes a fuel oil heat exchanger (FOHE) 124 and an air oil cooler (AOC) 126. FOHE 124 is in fluid communication with fuel passage 110 and fuel passage 20. FOHE 124 is also in fluid communication with an oil circuit 127 which is a lubrication circuit associated with gas turbine engine 14, for example. AOC 126 is in fluid communication with oil circuit 127 downstream of FOHE 124. In an embodiment, AOC 126 may also be in selective fluid communication with the environment external to aircraft 10 through a coolant airflow (identified as AIR IN and AIR OUT in Fig. 2). FOHE 124 is configured to increase the temperature of fuel traversing FOHE 124 such that fuel flowing to engine assembly 17 has suitable temperature for reliable engine operation. This can compensate for exposure of aircraft fuel system 12 (shown in Fig. 1) to extremely cold temperatures by raising the fuel temperature prior to its arrival at temperature sensitive elements.

Having described the structure of fuel conditioner 100, fluid flows through fuel conditioner 100 are now described. Fuel flow A is a fuel flow from aircraft fuel system 12 provided to ice debris separator 102. Fuel flow A can be extremely cold (or unheated), can be insufficiently filtered, and/or can have low fuel pressure without further conditioning. Ice debris separator 102 separates ice and debris above a maximum predetermined size from fuel flow A, and discharges the fuel as fuel flow B with as little pressure loss as possible.

Fuel flow B has entrained ice and debris particles below the predetermined maximum size for reliable operation of engine assembly 17. As will be appreciated by those skilled in art, fluid flow B can also have a lower pressure than fuel flow A, and/or can be excessively cold. Fuel pump 104 combines fuel flow B with a motive fluid flow E received through motive fluid passage 112 by entraining of fuel flow B with motive fluid flow E into a combined fuel flow. The combined flow has a greater pressure than fuel flow B, and is discharged by fuel pump 104 as fuel flow C.

Fuel flow C has entrained ice and debris particles below the maximum predetermined size for reliable operation of engine assembly 17 and a pressure greater than that required for reliable operation of engine assembly 17. However, as provided to heat exchanger 106, fuel flow C can be excessively cold and may require conditioning. Heat exchanger 106 transfers heat from the hot oil flow into fuel flow C. This increases the fuel temperature, further reduces the amount of entrained ice in the flow (if any), and decreases the temperature of the hot oil flow. Heat exchanger 106 discharges the heated fuel as fuel flow D.

Fuel flow D has entrained ice and debris particles below the maximum predetermined size for reliable operation of engine assembly 17, pressure greater than the minimum required for reliable operation of engine assembly 17, and a temperature greater than the minimum required for reliable operation of engine assembly 17. As will be appreciated by those skilled in art, fuel flow D can have a lower pressure than fuel flow C yet still have suitable pressure for reliable operation of engine assembly 17.

Fig. 3 shows heat exchanger 106, according to an embodiment. Heat exchanger 106 includes a housing 128 with FOHE 124 in fluid communication with AOC 126 therein. As illustrated, FOHE 124 and AOC 126 form an assembly disposed within housing 128. FOHE 124 and AOC 126 can also be disposed within separate housings. Fuel cooled body 130 is in fluid communication with fuel inlet 132, fuel outlet 134, oil inlet 136, and AOC 126. FOHE 124 is configured for exchanging heat between the hot oil flow received at oil inlet 136 and fuel flow C received at fuel inlet 132. Fuel cooled body 130 transfers heat into fuel flow C from the hot oil flowing from oil inlet 136, removing a first portion of heat from the hot oil flow and warming the fuel flow passing from fuel inlet 132 to fuel outlet 134.

In an embodiment, AOC 126 includes an air cooled body 138 and an oil outlet 144. Air cooled body 138 is in fluid communication with fuel cooled body 130 by way of an oil passage 125. Air cooled body 138 receives partially cooled oil from fuel cooled body 130 through oil passage 125 and transfers further heat from the partially cooled oil flow to the airflow passing through air cooled body 138 (identified as AIR IN and AIR OUT in Fig. 3). This removes a second amount of heat from oil traversing oil circuit 127, further cooling the oil flow prior to its return to engine assembly 17 (shown in Fig. 2) through oil outlet 144.

The air inflow to air cooled body 138 is selectively variable. In an embodiment, based on the temperature of the ambient environment external to the aircraft, the hot oil temperature, and/or the temperature of fuel flow C, the volume of air provided to air cooled body 138 can be increased or decreased. This provides for control over the second amount of heat removed from oil traversing oil circuit 127. It also allows for increasing the inlet temperature of hot oil supplied to fuel cooled body 130 at oil inlet 136, potentially compensating for extremely low temperatures of fuel flow C for enhanced deicing of the fuel flow. This provides additional fuel heating capacity, enabling fuel conditioner 100 to bring otherwise prohibitively cold fuel to a temperature suitable for reliable operation of engine assembly 17.

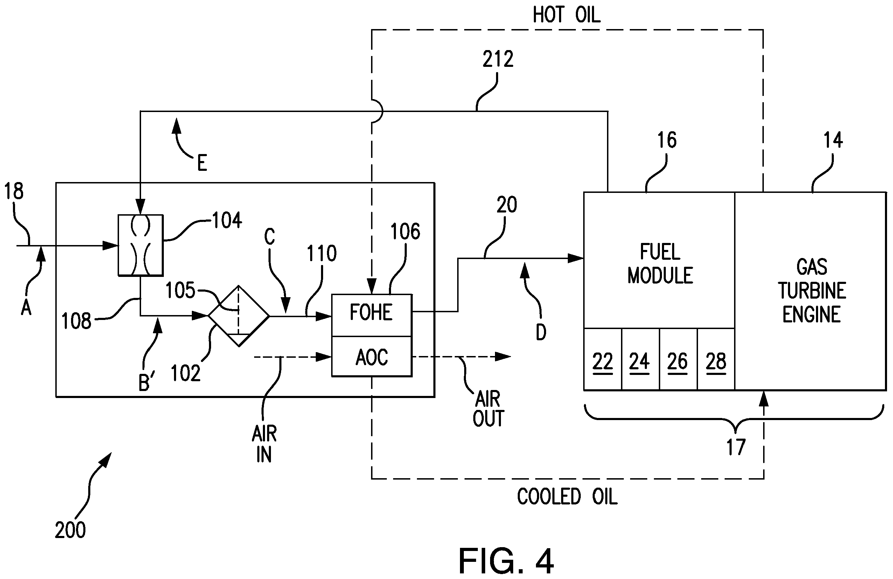

Fig. 4 shows an example of a fuel conditioner 200 not forming an embodiment of the presently claimed invention. Fuel conditioner 200 is similar to fuel conditioner 100, and however includes motive flow pump 104 arranged upstream of ice debris separator 102 and heat exchanger 106. As above, motive flow pump 104 is configured to receive fuel flow A from aircraft fuel system 12 (shown in Fig. 1). Motive flow pump 104 is also configured to receive motive fluid flow E from gas turbine engine 17.

Motive fluid flow E originates from gas turbine engine assembly 17 and is therefore warmer than the ambient temperature of fuel flow A. Heated motive fluid flow E entrains fuel flow A within motive flow pump 104, forming a warmed fuel flow B'. Since motive flow pump 104 is the first upstream element in fuel conditioner 200, warmed fuel flow B' flows to ice debris separator 102 where fuel flow B' melts ice separated from the fuel flow. This provides a mechanism for melting ice within ice debris separator 102.

Improvements in gas turbine engine efficiency allow for expansion of aircraft flight envelopes. Expansion of aircraft flight envelopes can potentially expose gas turbine engine fuel modules and gas turbine engines to challenging environmental conditions. These conditions can include exposure to temperatures which can cause ice formation within the aircraft fuel system. Once formed, ice particles can become mobilized and travel with fuel moving through the system, potentially damaging internal structures and components within the aircraft fuel system, engine fuel module, and the gas turbine engine itself unless measures are taken to condition the fuel.

Embodiments of fuel conditioner 100 can provide ice tolerance by removing entrained ice particles of potentially damaging size, heating the fuel flow, and compensating for fuel pressure loss associated with ice debris separator 102 and heat exchanger 106. For example, fuel conditioner 100 can protect components of fuel module 16 from ice particle damage, such as the leading edges of impeller vanes of impeller pump 22, by removing particles sufficiently sized to cause damage. In embodiments, fuel conditioner 100 increases fuel pressure from about a total vapor pressure (TVP) of the fuel plus 2 pounds per square inch (PSI) in fuel flow A to a pressure of about TVP plus 5 PSI in fuel flow D. In certain embodiments, fuel flow D can have a pressure of about TVP plus 12 PSI. This can allow for expansion of the flight envelope of aircraft 10 to include operating environments with extremely cold temperatures that otherwise cause fuel pressure to drop below the minimum pressure required for reliable operation. It will be understood by those skilled in the art that the fuel conditioner 100 pressure increases described herein are examples and that other pressure increases either or greater or less than those described herein are possible.

The methods and systems of the present disclosure, as described above and shown in the drawings, provide for aircraft fuel systems with superior properties including reliable engine operation with low fuel supply pressure and/or fuel flow that is not otherwise filtered to a level appropriate for the engine. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A gas turbine engine system comprising:
an aircraft fuel system (12);
a fuel conditioner (100); and
a gas turbine engine assembly (17) comprising a gas turbine engine (14) and a fuel module (16);
wherein the fuel conditioner comprises:
an ice debris separator (102) configured to receive a fuel flow (A) from the aircraft fuel system;
**characterised in that** it further comprises a fuel pump (104) in fluid communication with the ice debris separator, wherein the fuel pump is downstream of the ice debris separator and configured to receive filtered fuel and output pressurized fuel;
a heat exchanger (106) in fluid communication with the fuel pump, wherein the heat exchanger is downstream from the fuel pump and upstream of the fuel module of the gas turbine engine assembly, and wherein the heat exchanger is configured to receive a pressurized fuel flow (C) output from the fuel pump and output a heated fuel flow (D); and
wherein the fuel pump (104) is a motive flow pump configured to combine the fuel flow (B) from the ice debris separator and a motive fuel flow (E) from the fuel module.

2. A system as recited in claim 1, wherein the fuel conditioner (100) further includes an air oil cooler (126) in fluid communication with the heat exchanger (106) configured to receive cooled oil from the heat exchanger and including an air cooled body configured to further cool the oil using an air flow.

3. A system as recited in claim 1, wherein the ice debris separator (102) includes a heated filter screen (105) configured to separate ice of a predetermined size from fuel entering the system.

4. A system as recited in claim 2, wherein the air oil cooler (126) and heat exchanger (106) share a common housing.

5. A system as recited in claim 2 wherein the air oil cooler (126) is configured to selectively cool the oil flow based on ambient air temperature.

6. A system as recited in claim 2, wherein the air oil cooler (126) is in fluid communication with the heat exchanger (106) and is configured to enhance heating of fuel flowing through the heat exchanger for deicing the fuel.

7. A system as claimed in claim 1, wherein the fuel module (16) includes a fuel pump (22, 26), a fuel filter (24), and a fuel heater (26), wherein the fuel pump is in fluid communication with the heat exchanger (106) and configured to receive heated fuel from the heat exchanger and output further pressurized fuel to the motive flow pump (104) and the gas turbine engine (14).

8. A system as recited in claim 7, further including an air oil cooler (126) in fluid communication with the heat exchanger (106) and configured to receive cooled oil from the heat exchanger and including an air cooled body configured to further cool the oil using an air flow.

9. A system as recited in claim 7, wherein the motive flow pump (104) is a first fuel pump stage, and wherein the fuel pump (22, 26) includes a second fuel pump stage (22) and a separate third fuel pump stage (26).

10. A system as recited in claim 9, wherein the second fuel pump stage is an impeller pump (22) in fluid communication with the fuel conditioner (100).

11. A system as recited in claim 10, wherein the third fuel pump stage is a gear pump (26) in fluid communication with the impeller pump (22).

12. A system as recited in claim 7, wherein the fuel conditioner (100) is configured to receive fuel at a pressure of about the fuel total vapor pressure plus 5 pounds per square inch (0.35 bar) and output fuel at a pressure of about the fuel total vapor pressure plus 12 pounds per square inch (0.82 bar).

13. A system as recited in claim 7, wherein the gas turbine engine (14) is an aircraft (10) main engine turbine.

14. A system as recited in claim 7, wherein the gas turbine engine (14) is an aircraft (10) auxiliary power unit turbine.

## Patentansprüche

1. Gasturbinentriebwerksystem, umfassend:
ein Kraftstoffsystem für Luftfahrzeuge (12);
einen Kraftstoffzusatz (100); und
eine Gasturbinentriebwerksanordnung (17), die ein Gasturbinentriebwerk (14) und ein Kraftstoffmodul (16) umfasst;
wobei der Kraftstoffzusatz Folgendes umfasst:
einen Eistrümmer-Abscheider (102), der so konfiguriert ist, dass er einen Kraftstoffstrom (A) vom Kraftstoffsystem für Luftfahrzeuge aufnimmt;
**dadurch gekennzeichnet, dass** es ferner Folgendes umfasst eine Kraftstoffpumpe (104) in Fluidverbindung mit dem Eistrümmer-Abscheider, wobei die Kraftstoffpumpe dem Eistrümmer-Abscheider nachgelagert ist und so konfiguriert ist, dass sie gefilterten Kraftstoff aufnimmt und unter Druck stehenden Kraftstoff abgibt;
einen Wärmetauscher (106) in Fluidverbindung mit der Kraftstoffpumpe, wobei der Wärmetauscher der Kraftstoffpumpe nachgelagert und dem Kraftstoffmodul der Gasturbinentriebwerksanordnung vorgelagert ist und wobei der Wärmetauscher so konfiguriert ist, dass er den unter Druck stehenden Kraftstoffstrom (C), der von der Kraftstoffpumpe ausgegeben wird, aufnimmt und einen erwärmten Kraftstoffstrom (D) abgibt; und
wobei die Kraftstoffpumpe (104) eine Treibstrompumpe ist, die so konfiguriert ist, dass sie den Kraftstoffstrom (B) vom Eistrümmer-Abscheider und einen Treibkraftstoffstrom (E) vom Kraftstoffmodul kombiniert.

2. System nach Anspruch 1, wobei der Kraftstoffzusatz (100) ferner einen Luft-Ölkühler (126) in Fluidverbindung mit dem Wärmetauscher (106) umfasst, der so konfiguriert ist, dass er gekühltes Öl aus dem Wärmetauscher aufnimmt, und einen luftgekühlten Körper umfasst, der so konfiguriert ist, dass er das Öl unter Verwendung eines Luftstroms weiter abkühlt.

3. System nach Anspruch 1, wobei der Eistrümmer-Abscheider (102) ein beheiztes Filtersieb (105) umfasst, das so konfiguriert ist, dass es Eis einer vorbestimmten Größe vom Kraftstoff, der in das System eintritt, abtrennt.

4. System nach Anspruch 2, wobei sich der Luft-Ölkühler (126) und der Wärmetauscher (106) ein gemeinsames Gehäuse teilen.

5. System nach Anspruch 2, wobei der Luft-Ölkühler (126) so konfiguriert ist, dass er den Ölstrom auf Grundlage der Umgebungslufttemperatur selektiv abkühlt.

6. System nach Anspruch 2, wobei der Luft-Ölkühler (126) in Fluidverbindung mit dem Wärmetauscher (106) steht und so konfiguriert ist, dass das Heizen des Kraftstoffs, der durch den Wärmetauscher strömt, zum Enteisen des Kraftstoffs verbessert wird.

7. System nach Anspruch 1, wobei das Kraftstoffmodul (16) eine Kraftstoffpumpe (22, 26), einen Kraftstofffilter (24) und einen Kraftstofferhitzer (26) umfasst, wobei die Kraftstoffpumpe in Fluidverbindung mit dem Wärmetauscher (106) steht und so konfiguriert ist, dass sie das beheizte Öl aus dem Wärmetauscher aufnimmt und ferner unter Druck stehenden Kraftstoff an die Treibstrompumpe (104) und das Gasturbinentriebwerk (14) abgibt.

8. System nach Anspruch 7, das ferner einen Luft-Ölkühler (126) in Fluidverbindung mit dem Wärmetauscher (106) umfasst und so konfiguriert ist, dass er gekühltes Öl aus dem Wärmetauscher aufnimmt, sowie einen luftgekühlten Körper umfasst, der so konfiguriert ist, dass er das Öl unter Verwendung eines Luftstroms weiter abkühlt.

9. System nach Anspruch 7, wobei die Treibstrompumpe (104) eine erste Kraftstoffpumpenstufe ist und wobei die Kraftstoffpumpe (22, 26) eine zweite Kraftstoffpumpenstufe (22) und eine separate dritte Kraftstoffpumpenstufe (26) umfasst.

10. System nach Anspruch 9, wobei die zweite Kraftstoffpumpenstufe eine Flügelradpumpe (22) in Fluidverbindung mit dem Kraftstoffzusatz (100) ist.

11. System nach Anspruch 10, wobei die dritte Kraftstoffpumpenstufe eine Zahnradpumpe (26) in Fluidverbindung mit der Flügelradpumpe (22) ist.

12. System nach Anspruch 7, wobei der Kraftstoffzusatz (100) so konfiguriert ist, dass er Kraftstoff bei einem Druck von etwa dem Gesamtdampfdruck des Kraftstoffs zuzüglich 5 Pfund je Quadratzoll (0,35 bar) aufnimmt und Kraftstoff bei einem Druck von ungefähr dem Gesamtdampfdruck des Kraftstoffs zuzüglich 12 Pfund je Quadratzoll (0,82 bar) abgibt.

13. System nach Anspruch 7, wobei das Gasturbinentriebwerk (14) eine Haupttriebwerksturbine des Luftfahrzeugs (10) ist.

14. System nach Anspruch 7, wobei das Gasturbinentriebwerk (14) eine Hilfsantriebseinheitenturbine des Luftfahrzeugs (10) ist.

## Revendications

1. Système de moteur de turbine à gaz comprenant :
un système de carburant d'aéronef (12) ;
un conditionneur de carburant (100) ; et
un ensemble de moteur de turbine à gaz (17) comprenant un moteur de turbine à gaz (14) et un module de carburant (16) ;
dans lequel le conditionneur de carburant comprend :
un séparateur de débris de glace (102) configuré pour recevoir un flux de carburant (A) du système de carburant d'aéronef ;
**caractérisé en ce qu'**il comprend en outre une
pompe de carburant (104) en communication fluidique avec le séparateur de débris de glace, dans lequel la pompe de carburant est en aval du séparateur de débris de glace et
configurée pour recevoir du carburant filtré et sortir du carburant pressurisé ;
un échangeur de chaleur (106) en communication fluidique avec la pompe de carburant, dans lequel l'échangeur de chaleur est en aval de la pompe de carburant et en amont du module de carburant de l'ensemble de moteur de turbine à gaz, et
dans lequel l'échangeur de chaleur est configuré pour recevoir un flux de carburant pressurisé (C) sorti de la pompe de carburant et sortir un flux de carburant chauffé (D) ; et
dans lequel la pompe de carburant (104) est une pompe de flux moteur configurée pour combiner le flux de carburant (B) du séparateur de débris de glace et un flux de carburant moteur (E) du module de carburant.

2. Système selon la revendication 1, dans lequel le conditionneur de carburant (100) inclut en outre un refroidisseur d'huile à air (126) en communication fluidique avec l'échangeur de chaleur (106) configuré pour recevoir de l'huile refroidie de l'échangeur de chaleur et incluant un corps refroidi par l'air configuré pour refroidir encore l'huile en utilisant un flux d'air.

3. Système selon la revendication 1, dans lequel le séparateur de débris de glace (102) inclut un écran de filtre chauffé (105) configuré pour séparer de la glace d'une taille prédéterminée du carburant entrant dans le système.

4. Système selon la revendication 2, dans lequel le refroidisseur d'huile à air (126) et l'échangeur de chaleur (106) partagent un logement commun.

5. Système selon la revendication 2, dans lequel le refroidisseur d'huile à air (126) est configuré pour refroidir sélectivement le flux d'huile sur la base de la température d'air ambiant.

6. Système selon la revendication 2, dans lequel le refroidisseur d'huile à air (126) est en communication fluidique avec l'échangeur de chaleur (106) et est configuré pour améliorer le chauffage de carburant s'écoulant au travers de l'échangeur de chaleur pour dégivrer le carburant.

7. Système selon la revendication 1, dans lequel le module de carburant (16) inclut une pompe de carburant (22, 26), un filtre de carburant (24), et un chauffage de carburant (26), dans lequel la pompe de carburant est en communication fluidique avec l'échangeur de chaleur (106) et configurée pour recevoir du carburant chauffé de l'échangeur de chaleur et sortir encore du carburant pressurisé pour la pompe de flux moteur (104) et le moteur de turbine à gaz (14).

8. Système selon la revendication 7, incluant en outre un refroidisseur d'huile à air (126) en communication fluidique avec l'échangeur de chaleur (106) et configuré pour recevoir de l'huile refroidie de l'échangeur de chaleur et incluant un corps refroidi par l'air configuré pour refroidir encore l'huile en utilisant un flux d'air.

9. Système selon la revendication 7, dans lequel la pompe de flux moteur (104) est un premier étage de pompe à carburant, et dans lequel la pompe de carburant (22, 26) inclut un deuxième étage de pompe de carburant (22) et un troisième étage de pompe de carburant (26) séparé.

10. Système selon la revendication 9, dans lequel le deuxième étage de pompe de carburant est une pompe à hélice (22) en communication fluidique avec le conditionneur de carburant (100).

11. Système selon la revendication 10, dans lequel le troisième étage de pompe de carburant est une pompe à engrenages (26) en communication fluidique avec la pompe à hélice (22).

12. Système selon la revendication 7 dans lequel le conditionneur de carburant (100) est configuré pour recevoir du carburant à une pression d'environ la pression de vapeur totale de carburant plus 5 livres par pouce carré (0,35 bar) et sortir du carburant à une pression d'environ la pression de vapeur totale de carburant plus 12 livres par pouce carré (0,82 bar).

13. Système selon la revendication 7, dans lequel le moteur de turbine à gaz (14) est une turbine de moteur principal d'un aéronef (10).

14. Système selon la revendication 7, dans lequel le moteur de turbine à gaz (14) est une turbine d'unité de puissance auxiliaire d'un aéronef (10).
